# DEMANDE DE BREVET EUROPEEN

(11) **EP 0 842 877 A1**
(43) Date de publication de la demande: **20.05.1998**
(21) Numéro de dépôt: 97490036.7
(22) Date de dépôt: 17.11.1997
(51) Int. Cl.: B65G 47/51, B65B 55/10

(54) **Machine de traitement en ligne de récipients et ligne de transfert pneumatique de récipients équipée de cette machine**

(30) Priorité: 18.11.1996 FR 9614247
(71) Demandeur: Netra Systems, 59700 Marcq en Baroeul (FR)
(72) Inventeur: Declercq, Philippe, 59110 La Madeleine (FR)
(74) Mandataire: Matkowska, Franck

(57) **Abrégé**

La machine de traitement en ligne de récipients comprend une enceinte de traitement (8) avec une voie de chargement (10) et une voie de déchargement (11) d'une rangée de récipients (17) distinctes l'une de l'autre, et un carrousel (9) , du type premier entré-premier sorti, qui d'une part comprend une pluralité de rails (16) mobiles successifs équidistants conçus pour recevoir chacun une rangée de récipients, et des moyens (13,14,15) de mise en mouvement de l'ensemble des rails mobiles (16), et qui d'autre part est monté à l'intérieur de l'enceinte (8) en sorte de permettre le transfert de rangées successives de récipients (17) depuis la voie de chargement (10) jusqu'à la voie de déchargement (11) de l'enceinte. Le carrousel étant en outre équipé de moyens de régulation qui sont conçus pour faire avancer l'ensemble des rails mobiles (16) par pas successifs à une cadence donnée de telle sorte que le temps de parcours de chaque rail (16) entre la voie de chargement (10) et la voie de déchargement (11) est sensiblement égal à une durée prédéterminée (T).

## Description

La présente invention concerne le traitement en ligne de récipients et plus particulièrement de bouteilles, dans une ligne de transfert pneumatique entre une machine amont, telle qu'une machine de fabrication desdits récipients, et une machine aval telle que par exemple une machine de remplissage. L'invention a plus particulièrement pour objet une machine permettant d'assurer un traitement en ligne de récipients pendant une durée déterminée, ainsi qu'une ligne de transfert pneumatique de récipients équipée d'une telle machine.

Dans l'industrie de l'embouteillage, il est classique de transporter par voie pneumatique des récipients et notamment des bouteilles en matière plastique du type PET ou PVC, entre une machine amont de fabrication par soufflage desdits récipients et une machine aval de remplissage desdits récipients. Plus particulièrement, ces lignes de transfert mettent en oeuvre des convoyeurs pneumatiques dans lesquels les récipients sont suspendus par une protubérance de leur col et sont poussés les uns derrière les autres sous l'action de jets d'air. La cadence de production de ces lignes de transfert pneumatique est en pratique comprise entre 10 000 à 60 000 récipients/ heure.

Pour des raisons évidentes d'hygiène, il est nécessaire dans ces lignes d'embouteillage de s'assurer que l'intérieur des récipients avant remplissage n'est pas contaminé par des bactéries. Pour ce faire, il est par exemple envisageable d'introduire dans les récipients au cours de leur transfert pneumatique un produit aseptisant qui devra être maintenu à une température déterminée pendant une durée optimale prédéterminée, et par exemple à 50 °C pendant dix minutes. Dans ce cas, il faut s'assurer que le maintien à température de chaque récipient contenant le produit aseptisant se fera pendant une durée effective qui reste comprise entre une durée maximale à ne pas dépasser et une durée minimale en deça de laquelle l'action du produit aseptisant n'est pas suffisamment efficace.

Le but de la présente invention est de proposer une machine qui peut être interposée sur une ligne de transfert de récipients, et qui permet de traiter automatiquement en ligne des récipients pendant une durée prédéterminée contrôlée.

Ce but est atteint par la machine de traitement en ligne de récipients de l'invention qui comprend une enceinte de traitement avec une voie de chargement et une voie de déchargement d'une rangée de récipients distincte l'une de l'autre, et un carrousel, du type premier entré - premier sorti ; le carrousel comprend une pluralité de rails mobiles successifs équidistants conçus pour recevoir chacun une rangée de récipients, et des moyens de mise en mouvement de l'ensemble des rails mobiles ; le carrousel est monté à l'intérieur de l'enceinte en sorte de permettre le transfert des rangées successives de récipients depuis la voie de chargement jusqu'à la voie de déchargement de l'enceinte de traitement ; le carrousel est en outre équipé de moyens de régulation qui sont conçus pour faire avancer l'ensemble des rails mobiles par pas successifs à une cadence donnée de telle sorte que le temps de parcours de chaque rail entre la voie de chargement et la voie de déchargement est sensiblement égal à une durée prédéterminée.

Dans le domaine de l'embouteillage on a déjà proposé des carrousels permettant le stockage dynamique temporaire en ligne de récipients. Ces carrousels sont interposés sur le parcours des récipients entre une machine amont et une machine aval. La finalité de ces carrousels est tout autre que celle du carrousel utilisé dans la machine de traitement de l'invention, étant donné que ces carrousels connus antérieurement sont conçus de manière à pouvoir absorber les arrêts momentanés des machines amont ou aval, afin que celles-ci ne s'influencent pas mutuellement en cas de panne. La fonction de ces carrousels connus antérieurement est donc de délester la ligne de transfert en stockant temporairement des récipients en cas d'arrêt ou de ralentissement de la machine aval, et de recharger la ligne de transfert avec les récipients stockés temporairement lors du redémarrage ou du retour à un fonctionnement normal de la machine aval ou encore en cas d'arrêt accidentel ou de ralentissement de la machine amont, et ce afin d'éviter que la machine aval ne soit plus approvisionnée en récipients.

Dans la plupart des cas, ces carrousels à fonction de stockage dynamique temporaire seront du type dernier entré - premier sorti tel que le carrousel décrit dans la demande de brevet européen EP 485 344. Dans ce cas le carrousel comprend une voie de chargement qui se confond avec la voie de déchargement. En fonctionnement normal de la ligne de transfert, c'est-à-dire lorsque les machines amont et aval fonctionnent normalement, les récipients passent à travers le carrousel sans être stockés. Lorsque la machine aval est arrêtée, on met en rotation le carrousel dans un sens donné afin de prélever une ou plusieurs rangées successives de récipients pendant toute la durée de l'arrêt de la machine aval. Lorsque il arrive par exemple que la machine amont s'arrête momentanément alors que la machine aval fonctionne normalement, on met automatiquement en mouvement le carrousel dans la direction inverse, en sorte de décharger dans la ligne de transfert, et dans leur ordre inverse d'entrée dans le carrousel, les rangées successives de récipients qui ont été précédemment stockées.

Il est également connu, mais moins répandu, d'utiliser pour réaliser le stockage temporaire dynamique de récipients dans une ligne de transfert un carrousel qui soit du type premier entré - premier sorti. Ce type de carrousel a par exemple déjà été décrit dans la demande de brevet européen EP.O48636O et est de préférence monté en by-pass sur les lignes de transfert, les récipients étant ainsi acheminés en direction de l'entrée du carrousel en cas d'arrêt uniquement de la machine aval et étant ré-injectés dans la ligne de transfert en sortie du carrousel uniquement en cas d'arrêt de la machine amont.

Dans tous les cas connus d'utilisation d'un carrousel pour réaliser le stockage dynamique temporaire de récipients sur une ligne de transfert pneumatique, et y compris dans le carrousel de la demande de brevet européen EP.0486360, la commande de mise en mouvement du carrousel est nécessairement synchronisée avec le fonctionnement des machines amont et aval. Le temps de présence d'un récipient à intérieur du carrousel ne peut donc pas être maîtrisé mais dépend des arrêts impondérables des machines amont ou aval. En outre, la totalité des récipients transférés entre les machines amont et aval n'est pas stockée dans le carrousel. Pour ces raisons, il n'était pas envisageable d'utiliser les carrousels connus à ce jour pour s'assurer que la totalité des récipients transférés entre une machine amont et une machine aval subissent au cours de leur transfert un traitement pendant une durée prédéterminée contrôlée.

Dans une variante particulière de réalisation, la machine selon l'invention est utilisée pour appliquer un traitement thermique en ligne aux récipients. Dans ce cas la machine de traitement est équipée de moyens de chauffage permettant de maintenir l'intérieur de l'enceinte de traitement à une température donnée. Cette machine de traitement sera utilisée pour réaliser l'aseptisation des récipients en ligne, un produit aseptisant ayant été préalablement introduit dans chacun des récipients en amont de l'entrée de la machine.

L'invention a pour autre objet une ligne de transfert pneumatique de récipients entre une machine amont et une machine aval, laquelle ligne comprend une machine de traitement selon l'invention interposée entre les machines amont et aval. Dans le cadre de la ligne de transfert de l'invention, lorsque la machine aval s'arrête momentanément, il y a un risque que la sortie de la machine de traitement soit bloquée du fait de la présence des récipients bloqués à l'entrée de la machine aval. Dans ce cas, si l'arrêt de la machine aval se prolonge il n'est plus possible en contrôlant le mouvement du carrousel de la machine de traitement de l'invention d'assurer que la durée des traitements n'excédera pas la durée prévue. Si un tel incident se produit, on est donc obligé de prévoir un déchargement de la machine de traitement soit manuellement, soit en déchargeant automatiquement la machine par une issue auxiliaire prévue à cet effet. Dans le but d'éviter qu'un tel incident ne se produise, c'est-à-dire d'éviter un blocage de la machine de traitement en cas d'arrêt de la machine aval, la ligne de transfert pneumatique de l'invention comprend de préférence un dispositif d'accumulation dynamique de récipients qui est monté entre la sortie de la machine de traitement et l'entrée de la machine aval, et dont la fonction est de délester la ligne de transfert en cas d'arrêt de la machine aval. Ce dispositif d'accumulation dynamique sera par exemple du type dernier entré - premier sorti tel que par exemple le dispositif décrit dans la demande de brevet européen EP 485 344.

D'autres caractéristiques et avantages de l'invention apparaîtront plus clairement à la lecture de la description suivante d'une variante particulière de réalisation d'une machine de l'invention pour le traitement thermique en ligne de bouteilles et de sa mise en oeuvre dans une ligne d'embouteillage, laquelle description est donnée à titre d'exemple non limitatif et en référence au dessin annexé sur lequel :
- la figure 1 est un synoptique d'une ligne d'embouteillage mettant notamment en oeuvre une machine de traitement thermique de bouteilles en ligne, combinée à un stockeur dynamique de récipients disposé en aval de cette machine de traitement,
- la figure 2 est une vue schématique de l'intérieur de la machine de traitement de la figure 1,
- la figure 3 est une vue plus détaillée d'un rail utilisé pour l'acheminement d'une rangée de bouteilles à l'intérieur de la machine de traitement de la figure 2,
- la figure 4 représente les moyens électroniques de régulation de l'avance pas à pas du carrousel de la machine de traitement de la figure 2,
- et la figure 5 représente un exemple de diagramme de la vitesse d'avancement du carrousel pendant l'avance d'un pas.

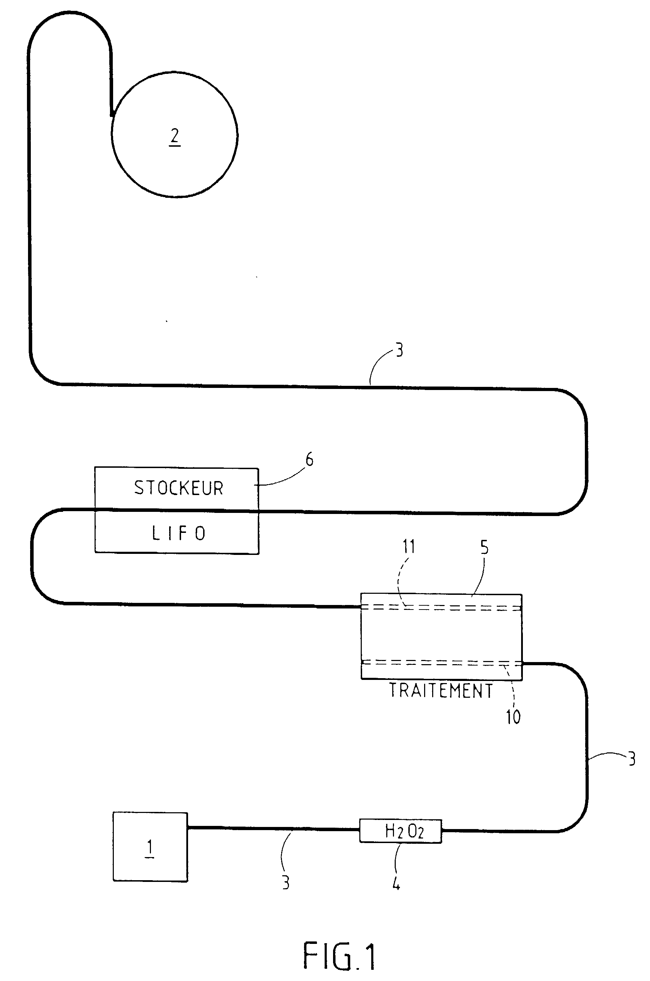

La ligne d'embouteillage représentée schématiquement sur la figure 1 comporte en amont une machine de fabrication 1 de bouteilles en matière plastique, notamment en PET ou PVC communément appelée souffleuse, et en aval une machine 2 de remplissage des bouteilles après sous-tirage. Les bouteilles issues de la machine de fabrication 1 sont acheminées jusqu'à la machine de remplissage 2 au moyen de convoyeurs pneumatiques 3. De manière classique, chaque convoyeur pneumatique se présente sous la forme d'un caisson longitudinal dans lequel les bouteilles sont véhiculées en étant suspendues par une protubérance de leur col. Ce caisson est alimenté en air faiblement pressurisé, permettant de faire avancer les bouteilles les unes derrière les autres le long du caisson. Ce type de convoyeur pneumatique est largement répandu et a été décrit notamment dans la demande de brevet européen EP 070 931 ou le brevet US 4 284 370 ou encore dans la demande de brevet européen EP 705 777, qui font partie intégrante de la présente description.

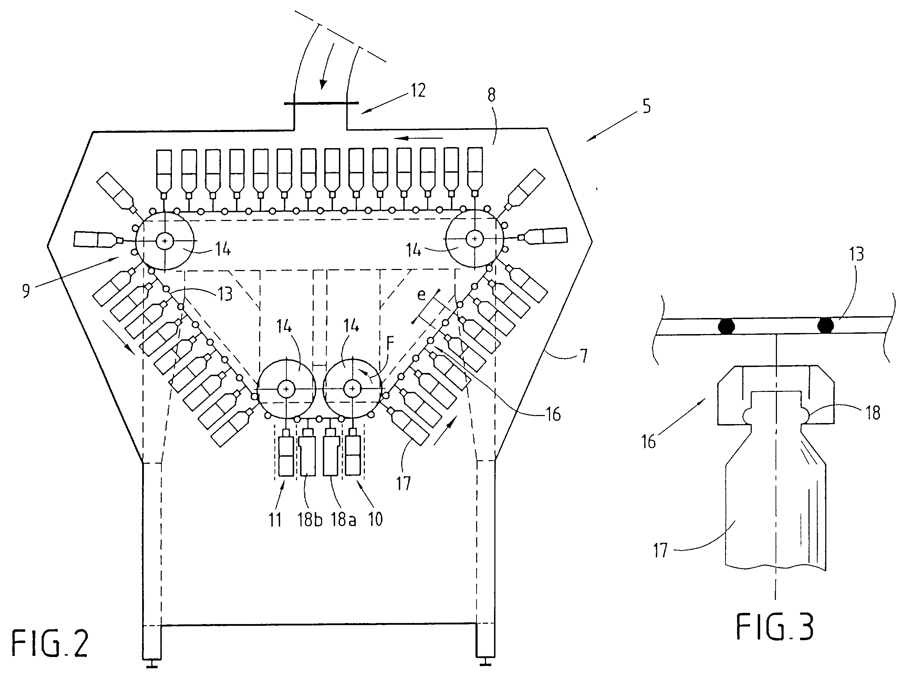

Dans l'exemple particulier de la figure 1, les bouteilles vides issues de la machine de fabrication 1 sont acheminées jusqu'à une première machine 4, au niveau de laquelle on introduit automatiquement en ligne un produit réactif aseptisant à l'intérieur des bouteilles et l'on bouche chaque bouteille. Le produit réactif aseptisant sera par exemple de l'eau oxygénée. Les bouteilles issues de la machine 4 sont ensuite acheminées jusqu'à une machine 5 conforme à l'invention pour le traitement thermique en ligne des bouteilles. La structure et le fonctionnement de cette machine 5 seront détaillés ci-après en référence aux figures 2 à 5.

En sortie de la machine de traitement 5, les bouteilles aseptisées sont acheminées jusqu'à un stockeur 6 du type dernier entré - premier sorti, plus communément appelé stockeur LIFO. La structure et le fonctionnement d'un tel stockeur sont connus et ont été notamment décrits dans la demande de brevet européen EP 485 344 qui fait partie intégrante de la présente description. Il sera simplement rappelé qu'en fonctionnement normal, c'est-à-dire lorsque toutes les machines de la ligne d'embouteillage fonctionnent normalement, les bouteilles traversent le stockeur 6 sans être arrêtées.

Lorsqu'elles arrivent dans la machine aval 2, les bouteilles subissent en ligne la succession d'étapes suivantes. Leur bouchon est retiré, le produit réactif aseptisant est rincé, et est remplacé par le liquide définitif que doit contenir les bouteilles, puis chaque bouteille est fermée définitivement.

La finalité de la machine de traitement 5 dont une variante particulière de réalisation va à présent être décrite, est de produire en sortie des bouteilles aseptisées. Dans ce but, la machine de traitement 5 a pour fonction d'assurer un maintien de chaque bouteille produite contenant le produit réactif aseptisant dans une atmosphère confinée portée à une température donnée, pendant une durée optimale contrôlée, et ce sans affecter la cadence de production de la ligne d'embouteillage, et notamment sans interrompre la production de bouteilles. La durée effective de séjour de chaque bouteille dans la machine de traitement 5 est surveillée automatiquement afin de s'assurer qu'elle reste comprise entre une durée minimum prédéterminée, qui correspond à la durée minimale de réaction du produit aseptisant contenu dans chaque bouteille, et une durée maximale au-delà de laquelle il y a un risque d'altération du produit aseptisant, ou d'imprégnation irréversible de la paroi interne du récipient (ne pouvant être éliminée par simple rinçage dans la machine 2). Si en cours de fonctionnement, la durée de séjour effective des bouteilles dans la machine de traitement devient inférieure à la durée minimale prévue, dans ce cas il est impératif de vidanger la machine de traitement, en retirant les bouteilles qu'elle contient et qui ne sont pas suffisamment aseptisés, soit manuellement, soit automatiquement par une sortie auxiliaire prévue à cet effet. Si la durée de séjour effective des bouteilles dans la machine de traitement devient au contraire supérieure à la durée maximale prévue, dans ce cas la ré-injection des bouteilles dans la lignes d'embouteillage pourra être laissée à l'appréciation d'un opérateur.

Dans l'exemple particulier de la figure 2, la machine de traitement 5 comporte un capotage 7 délimitant une enceinte de traitement 8 confinée, avec une voie de chargement 10 d'une rangée de bouteilles et une voie de déchargement 11. Pour une meilleure compréhension, la position des voies 10 et 11 a été symbolisée par des pointillés sur la figure 2. Si l'on se réfère à la figure 1, la voie de chargement 10 est alignée avec le convoyeur pneumatique 3 en amont de la machine de traitement 5 tandis que la voie de déchargement 11 est alignée avec le convoyeur pneumatique 3 permettant d'acheminer en sortie les bouteilles jusqu'au stockeur 6.

A l'intérieur de l'enceinte de traitement 8 est monté un carrousel 9 du type premier entré - premier sorti permettant d'acheminer en un temps donné chaque rangée successive de bouteilles introduites dans la voie de chargement 10, jusqu'à la voie de déchargement 11. En partie supérieure le capotage 7, est équipé d'un conduit 12 pour l'introduction forcée d'un air chaud porté à une température donnée, à l'intérieur de l'enceinte de traitement 8. En partie inférieure, ce capotage 7 est ouvert afin de permettre un renouvellement de l'air contenu à l'intérieur de l'enceinte de traitement 8. Le renouvellement de cet air est assuré de manière connue de telle sorte que la température à l'intérieur de l'enceinte de traitement soit sensiblement constante. Bien entendu ces moyens pourront être remplacés par tout moyen de chauffage équivalent connu de l'homme du métier et permettant de maintenir la température à l'intérieur de l'enceinte de traitement 8 à une valeur donnée.

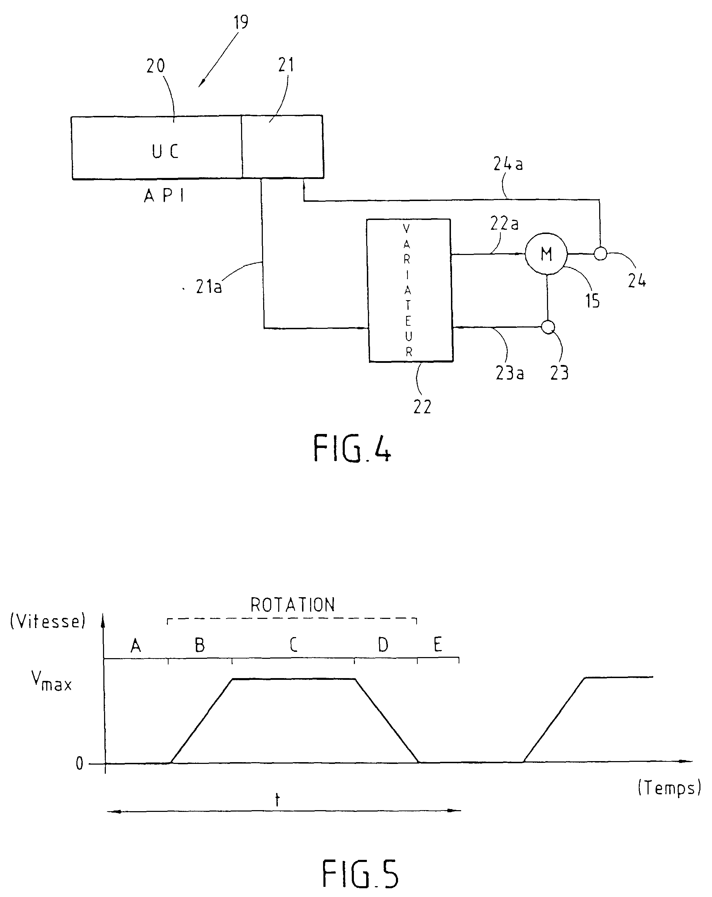

Le carrousel 9 de la machine de traitement 5 est monté sur un bâti représenté en pointillés et comprend principalement une nappe sans fin 13 trapézoïdale montée tendue sur quatre roues dentées 14 à fonction de pignons d'entraînement. Les quatre pignons 14 peuvent être entraînés positivement en rotation dans le sens anti-horaire (flèche F) en étant couplés mécaniquement à un moteur à courant continu et plus particulièrement à un moteur brushless référencé 15 sur la figure 4, par l'intermédiaire d'un ensemble réducteur (non représenté). Sur toute la périphérie de la nappe 13 sont fixés des rails 16 équidistants espacés deux à deux d'un écartement e constant. Chaque rail 16 a sensiblement la même longueur que les voies de chargement 10 et de déchargement 11, et est conçu pour servir de support à une rangée de bouteilles 17.

On a représenté à la figure 3 un profil particulier de rail 16, par ailleurs déjà connu, et permettant de supporter une rangée de bouteilles 17 par l'intermédiaire d'une protubérance 18 de leur col.

Tel que cela apparaît sur la figure 2 entre les deux voies de chargement 10 et de déchargement 11 l'enceinte de traitement 8 est équipée de deux caissons de soufflage 18a, 18b. Le caisson 18a permet de propulser les bouteilles 17 arrivant à l'entrée de la voie de chargement 10 sur le rail 16, qui se trouve aligné à un instant donné avec la voie de chargement 10. Le caisson 18b permet de propulser en direction de la sortie de l'enceinte de traitement 8, les bouteilles 17 stockées sur le rail 16 qui se trouvent en position alignée avec la voie déchargement 11 à un instant donné. Du fait de la présence de ces deux caissons de soufflage 18a, 18b, les deux rails 16 qui se trouvent à un instant donné entre les deux voies de chargement 10 et de déchargement 11 ne sont pas utilisés et sont nécessairement vides.

La commande du moteur brushless 15 est réalisée à l'aide de moyens de régulation décrits ci-après en référence aux figures 4 et 5, de telle sorte que la nappe 13 du carrousel 9, et par là-même l'ensemble des rails 16 solidaires de cette nappe 13, est entraîné en rotation par pas constants successifs, à une cadence (t), qui a été calculée de telle sorte que le temps de parcours d'un rail 16 depuis la voie de chargement 10 jusqu'à la voie de déchargement 11 est égale à une durée optimale (T), appelée par la suite temps de cycle machine. Chaque pas de la rotation de la nappe 13 correspond à l'écartement e entre deux rails 16 successifs, et l'écartement entre les voies de chargement 10 et de déchargement 11 est en outre identique à l'écartement e entre deux rails 16, de telle sorte qu'après l'avancement d'un pas de la nappe 13, un rail 16 donné du carrousel 9 est aligné avec la voie de chargement 10, et un autre rail 16 est aligné avec la voie de déchargement 11.

Le cycle d'entraînement de la nappe 13 de la machine de traitement 5 peut se décomposer à chaque pas en quatre phases successives, dont la durée globale est égale à la cadence (t) d'avancement pas à pas de la nappe 13. Dans une première phase, la nappe 13 est immobile, et le rail 16 aligné avec la voie de chargement 10 se remplit automatiquement avec une nouvelle rangée de bouteilles 17, tandis que pendant le même temps les bouteilles 17 supportées par le rail précédent 16 aligné avec la voie de déchargement 11 sont déchargées du rail pour être acheminées en direction du stockeur 6. Dans une deuxième phase, on attend un laps de temps suffisant supplémentaire pour s'assurer que toutes les bouteilles 17 du rail 16 aligné avec la voie de déchargement 11 aient été effectivement évacuées de la machine de traitement 5 en direction du stockeur 6. Dans une troisième phase, on commande la rotation d'un pas de la nappe 13 dans le sens anti-horaire, de telle sorte que le rail 16 précédemment aligné avec la voie de déchargement 11 se trouve amené en alignement avec la voie de chargement 10, et le rail 16 précédemment aligné avec la voie de chargement 10 commence son parcours à l'intérieur de l'enceinte de traitement 8. Dans une quatrième phase, on attend, si nécessaire, un laps de temps suffisant pour respecter la cadence (t) de la machine de traitement, c'est-à-dire en final le temps de cycle (T) de la machine de traitement 5.

Dans un exemple particulier de réalisation, les moyens de régulation pour la commande de l'avancement pas à pas du moteur 15 mettent en oeuvre un automate programmable industriel 19, un variateur de vitesse 22, un capteur 23 mesurant la vitesse instantanée de rotation du rotor du moteur 15, et un codeur de position absolu 24 monté de préférence en bout d'axe de l'un des pignons 14 d'entraînement de la nappe 13.

Plus particulièrement, l'automate programmable industriel 19 comprend une unité centrale 20 communiquant avec une carte électronique d'interface 21, qui est communément appelée carte d'axe, et qui pilote le variateur 22. A cet effet, la carte d'axe 21 délivre à destination du variateur 22 un signal analogique 21a dont la valeur correspond à une vitesse de consigne calculée par la carte d'axe 21. Le capteur 23 délivre à destination du variateur 22 un signal analogique 23a caractéristique de la vitesse instantanée de rotation du moteur 15. Le variateur 22 pilote de manière connue le moteur 15 par l'intermédiaire d'un signal de commande 22a qui est régulé par le variateur 22 à partir des signaux 21a et 23a de telle sorte que la vitesse de rotation du moteur 15 soit asservie à la vitesse de consigne (signal 21a) délivrée par la carte d'axe 21.

Le codeur de position 24 délivre à destination de la carte d'axe 21 un signal 24a caractéristique de la position instantanée de la nappe 13 au cours d'un cycle machine (T). De préférence, il s'agira d'un codeur incrémental à impulsions. A l'initialisation de la machine de traitement 5, ce codeur est référencé de telle sorte que la valeur zéro du codeur correspond à une position initiale de la nappe 13 du carrousel 9, dans laquelle un rail 16, dit par la suite rail de référence, est aligné avec la voie de chargement 10.

Les principales fonctionnalité de l'unité centrale 20 et de la carte d'axe 21 de l'automate programmable industriel 19 vont à présent être succinctement expliquées.

### Unité centrale 20

L'unité centrale 20 est programmée pour réaliser principalement deux fonctions. La première fonction principale est de communiquer à la carte d'axe 21 la position suivante que doit atteindre le rail 16 de référence, à chaque avancement d'un pas de la nappe 13. A cet effet, l'unité centrale possède en mémoire un fichier (ou une table) de configuration du carrousel 9, dans lequel sont répertoriées les côtes de chaque position successive que doit prendre le rail de référence à chaque avancement d'un pas, c'est-à-dire en définitive la position réelle de chaque rail 16 lorsque la nappe 13 est dans sa position initiale en début de cycle machine, le rail 16 de référence étant aligné avec la voie de chargement 10. Au début de chaque cycle d'avancement de la nappe 13, c'est-à-dire au début de la première phase précédemment décrite, l'unit centrale 20 récupère dans son fichier de configuration la côte de la position suivante du rail de référence, et la transmet à la carte d'axe.

La deuxième fonction principale de l'unité centrale est de surveiller le temps de cycle machine afin de contrôler que ce temps de cycle reste compris entre une durée minimale et une durée maximale données. A cet effet, chaque fois que le rail de référence repasse par la position zéro, c'est-à-dire est de nouveau en position alignée avec la voie de chargement 10, l'unité centrale 20 déclenche une horloge interne dont la valeur est périodiquement testée en cours de cycle machine. Lorsque l'unité centrale 20 détecte que la valeur de cette horloge dépasse le seuil maximal prédéterminé en cours de cycle, ou détecte qu'en fin de cycle machine cette valeur est inférieure au seuil minimum prédéterminé, l'unité centrale commande l'arrêt du moteur 15, et déclenche par exemple une alarme visuelle et éventuellement sonore pour un opérateur afin que celui-ci prennent les mesures appropriées, et notamment si il y a lieu réalise une vidange du carrousel 9 de la machine de traitement 5.

### Carte d'axe 21

La principale fonction de la carte d'axe 21 est d'assurer un asservissement en position du moteur 15 en délivrant pour le variateur 22 un signal de consigne analogique 21a dont la valeur est déterminée automatiquement par la carte d'axe 21, au cours de chaque cycle d'avancement d'un pas du carrousel 9, à partir du signal 24a délivré par le codeur de position 24, de la côte à atteindre pour le rail de référence 16 qui lui est communiqué à chaque fois par l'unité centrale 20, et de la cadence prédéterminée (t) de la machine de traitement 5, c'est-à-dire de la durée de chaque pas.

On a représenté à la figure 5 une exemple de diagramme des vitesses du moteur 15 lors de son avancement pas à pas, la courbe illustrée sur cette figure 5 étant représentative du signal analogique 21a de consigne délivré par la carte d'axe 21. Sur cette figure 5, la plage A correspond aux deux premières phases précédemment décrites du cycle d'avancement d'un pas (chargement dans la voie 10 des bouteilles 17 et évacuation des bouteilles 17 de la voie de déchargement 11). Les plages B,C,D correspondent à la troisième phase, c'est-à-dire à la commande de la rotation d'un pas du carrousel 9. La plage E correspond à la quatrième et dernière phase d'attente complémentaire pour terminer le cycle si nécessaire.

Plus particulièrement, la plage B correspond à une phase de démarrage du moteur 15 avec une accélération sensiblement linéaire jusqu'à atteindre une valeur maximale prédéterminée. La plage C correspond à une plage de maintien à vitesse maximale du moteur 15. La plage D correspond à une phase de décélération sensiblement linéaire du moteur 15. La pente de décélération de cette plage D est calculée et anticipée de manière connue en soit par la carte d'axe 21, de telle sorte qu'à l'issue de la plage D le moteur 15 est à l'arrêt, et le rail 16 de référence se trouve aligné avec la voie de chargement 10.

Tel que cela ressort de la description ci-dessus, la régulation en vitesse du moteur 15 réalisée par le variateur 22, est imbriquée dans un asservissement en position réalisé par la carte d'axe 21 lors du calcul de la vitesse de consigne pour le variateur 22, ce qui permet avantageusement d'effectuer un positionnement sans dépassement de consigne du carrousel 9 à chaque avancement d'un pas, et par là-même sans nécessiter d' inversion de sens de rotation de la nappe 13 du carrousel 9.

Dans une version simplifiée de la machine de traitement 5, la durée (t) d'un pas correspondant à la cadence d'avancement du carrousel 9 est déterminée une fois pour toute en fonction du temps de cycle machine (T) voulue, et du nombre de rails 16 du carrousel 9. Dans une variante perfectionnée entrant dans le cadre de l'invention revendiquée, l'unité centrale 20 peut être conçue pour calculer automatiquement, au cours d'un cycle machine donné, une nouvelle valeur de la durée (t) du pas suivant en sorte de respecter le cycle machine (T) prédéterminé, en cas d'incident intervenu en cours du cycle machine, et notamment en cas d'arrêt momentané accidentel du carrousel.

Dans un exemple précis de réalisation, la machine de traitement 5 était conçue assurer au maximum de sa capacité le traitement en ligne environ 11600 bouteilles/heure. La température à l'intérieur de l'enceinte de traitement 8 était maintenue à environ 50 °C. Le temps de cycle machine (T) correspondant à la durée de parcours d'un rail à l'intérieur de l'enceinte de traitement depuis la voie de chargement 10 jusqu'à la voie de déchargement 11 était de 10 minutes. Le carrousel 9 comportait quarante rails 16 espacés deux à deux d'une distance e valant environ 150 mm, avec une tolérance de 0,5 mm. Chaque rail 16 pouvait recevoir un maximum de 51 bouteilles. La durée t d'un cycle à chaque avancement d'un pas du carrousel valait par conséquent 15,8 secondes, dont 8 secondes étaient affectées à la mise en rotation d'un pas du carrousel (Figure 5 - plages B,C,et D).La résolution du codeur de position 24 valait 0,3 mm.

On comprend à la lumière de l'exemple ci-dessus que l'un des avantages du carrousel 9 est de permettre de maintenir dans un espace confiné correspondant au volume de l'enceinte de traitement 8 un nombre important de bouteilles, qui doit être suffisant pour respecter la cadence de production élevée de la ligne d'embouteillage. Dans l'exemple précité, le carrousel 9 en charge maximale, peut contenir jusqu'à 1 938 bouteilles, sachant par ailleurs que la surface au sol de l'enceinte de traitement 8 valait environ 25 m² et la hauteur au sol de l'enceinte de traitement valait environ 4,5 m.

Dans l'hypothèse ou la ligne d'embouteillage de la figure 1 ne serait pas équipée d'un stockeur dynamique 6 en aval de la sortie de la machine de traitement 5, il y aurait un risque important qu'en en cas d'arrêt prolongé de la machine aval 2, un blocage de la sortie de la machine de traitement 5 se produise. Un tel blocage serait tout-à-fait préjudiciable, car il provoquerait à un arrêt de l'acheminement des bouteilles à l'intérieur de la machine de traitement 5, et par là-même pourrait aboutir à un dépassement du seuil maximal autorisé pour le temps de cycle de la machine. La finalité du stockeur 6 est d'éviter un tel risque de blocage de la sortie de la machine de traitement 5. A cet effet, le stockeur 6 sera dimensionné en sorte de pouvoir stocker temporairement l'intégralité des bouteilles pouvant être contenues dans la machine de traitement, la capacité du stockeur 6 étant de préférence au moins égale à celle de la machine de traitement 5.

En pratique, lorsqu'un arrêt prolongé de la machine aval 2 est détecté, on commande automatiquement la mise en marche du stockeur 6 afin de délester la ligne d'embouteillage en prélevant des bouteilles et en les stockant temporairement au fur et à mesure qu'elles arrivent à l'entrée du stockeur. Dès que le taux de remplissage du stockeur 6 atteint un niveau tel que la capacité restante de stockage de ce stockeur devient égale à la capacité maximale de stockage de la machine de traitement 5, on arrête l'alimenter en bouteilles la machine de traitement 5, en commandant automatiquement l'arrêt de la machine amont 4 et éventuellement en bloquant l'entrée de la machine de traitement 5 au moyen d'une butée automatique. La détection du taux de remplissage du stockeur 6 lorsque ce dernier est mis en marche suite à un arrêt de la machine aval 2 pourra être réalisée automatiquement en comptabilisant au moyen d'un capteur optoélectronique placé à l'entrée du stockeur 6, le nombre de bouteilles entrant dans le stockeur 6. Une fois la machine amont 4 arrêtée, la machine de traitement 5 continue à fonctionner normalement et commence par conséquent à se vider. Si l'arrêt de la machine aval 2 se prolonge au-delà d'un laps de temps donné, la machine de traitement 5 se vide totalement et continue à tourner à vide. Lorsque la machine aval 2 reprend son fonctionnement normal, on commence par commander dans un premier temps le stockeur 6 en sorte que celui-ci se vide en réinjectant dans la ligne d'embouteillage, à destination de la machine 2, les bouteilles qu'il contient. Au-delà d'un certain seuil de remplissage de ce stockeur 6, et par exemple lorsque le stockeur est vide, on réalimente la machine de traitement 5 en commandant automatiquement la remise en marche de la machine amont 4 et en débloquant si nécessaire l'entrée de la machine de traitement 5. La détection du taux de remplissage du stockeur 6 au cours de sa vidange sera par exemple réalisée en comptabilisant automatiquement les bouteilles réinjectées dans la ligne d'embouteillage en sortie du stockeur 6 au moyen d'un capteur optoélectronique placé entre la sortie du stockeur 6 et l'entrée de la machine aval 2. On comprend à la lumière de l'explication ci-dessus que la principale fonction du stockeur 6 est donc de protéger la machine de traitement 5 en évitant, en cas d'arrêt de la machine aval 2, un blocage de la sortie de la machine de traitement 5, et par là-même en évitant un arrêt de la machine de traitement 5.

L'invention n'est pas limitée à la structure particulière de la machine de traitement 5 de la figure 2. Notamment, la nappe du carrousel n'a pas nécessairement une forme trapézoïdale, mais pourra avoir un contour fermé quelconque. L'invention peut être appliquée au traitement en ligne de tout type de récipients sur une ligne de transport desdits récipients. Enfin, le traitement appliqué aux récipients dans la machine de traitement 5 n'est pas nécessairement un traitement thermique. Il pourrait s'agir par exemple d'une pulvérisation d'un produit réactif , notamment aseptisant, sur l'extérieur des bouteilles, au moyen de rampes de pulvérisation montées à l'intérieur de l'enceinte de traitement.

## Revendications

1. Machine de traitement en ligne de récipients caractérisée en ce qu'elle comprend une enceinte de traitement (8) avec une voie de chargement (10) et une voie de déchargement (11) d'une rangée de récipients (17) distinctes l'une de l'autre, et un carrousel (9), du type premier entré-premier sorti, qui d'une part comprend une pluralité de rails (16) mobiles successifs équidistants conçus pour recevoir chacun une rangée de récipients, et des moyens (13,14,15) de mise en mouvement de l'ensemble des rails mobiles (16), et qui d'autre part est monté à l'intérieur de l'enceinte (8)en sorte de permettre le transfert de rangées successives de récipients (17) depuis la voie de chargement (10) jusqu'à la voie de déchargement (11) de l'enceinte, ledit carrousel étant en outre équipé de moyens de régulation (19,22,23,24) qui sont conçus pour faire avancer l'ensemble des rails mobiles (16) par pas successifs à une cadence donnée de telle sorte que le temps de parcours de chaque rail (16) entre la voie de chargement (10) et la voie de déchargement (11) est sensiblement égal à une durée prédéterminée (T).

2. Machine selon la revendication 1 caractérisée en ce que les moyens de mise en mouvement du carrousel (9) comprennent un moteur (15) à courant continu du type moteur brushless, en ce que les moyens de régulation comportent un automate programmable industriel (19) qui pilote un variateur de vitesse (22) par l'intermédiaire d'un signal analogique de consigne (21a), le variateur pilotant en sortie le moteur (15), un capteur (23) délivrant pour le variateur (22) un signal de mesure (23a) caractéristique de la vitesse instantanée de rotation du rotor du moteur (15), et un codeur de position (24) délivrant pour l'automate (19) un signal (24a) caractéristique de la position instantanée du carrousel (9), et en ce que l'automate (19) est programmé pour piloter le variateur de vitesse (22) en réalisant un asservissement en position de l'avance pas à pas du carrousel (9) à partir du signal (24a) délivré par le codeur de position (24) , et le variateur de vitesse (22) est conçu pour réaliser un asservissement en vitesse du moteur (15) à partir du signal de consigne (21a) délivré par l'automate (19) et du signal de mesure (23a) délivré par le capteur (23).

3. Machine selon la revendication lou 2 pour le traitement thermique en ligne de récipients caractérisée en ce qu'elle est équipée de moyens de chauffage permettant de maintenir la température à l'intérieur de l'enceinte de traitement (8) à une valeur donnée.

4. Machine selon la revendication 3 caractérisée en ce que la température de l'air à l'intérieur de l'enceinte de traitement (8) est maintenu à environ 50°C et le temps (T) de parcours d'un rail entre la voie de chargement (10) et la voie de déchargement (11) est de 10 minutes.

5. Ligne de transfert pneumatique de récipients entre une machine amont (1), et plus particulièrement une machine de fabrication de récipients, et une machine aval (2), et plus particulièrement une machine de remplissage de récipients, caractérisée en ce qu'elle comprend une machine (5) de traitement en ligne de récipients selon l'une quelconque des revendications 1 à 4 interposée sur le parcours des récipients entre les deux machines amont et aval.

6. Ligne de transfert pneumatique de récipients selon la revendication 5 caractérisée en ce qu'elle comprend en outre un dispositif d'accumulation dynamique de récipients (6), qui est monté entre la sortie de la machine de traitement (5) et l'entrée de la machine aval, pour délester la ligne de transfert en cas d'arrêt de la machine aval, et éviter un blocage de la machine de traitement (5).

7. Ligne de transfert pneumatique de récipients selon la revendication 6 caractérisée en ce que la capacité de stockage du dispositif d'accumulation dynamique de récipients (6) est au moins égale à celle de la machine de traitement (5).
